(19) **Europäisches Patentamt European Patent Office Office européen des brevets**

(11) **EP 3 828 586 B1**

(12) **FASCICULE DE BREVET EUROPEEN**

(45) Date de publication et mention de la délivrance du brevet:
**02.10.2024 Bulletin 2024/40**

(21) Numéro de dépôt: **20209877.8**

(22) Date de dépôt: **25.11.2020**

(51) Classification Internationale des Brevets (IPC):
**G01S 7/34** *(2006.01)*    **G01S 7/40** *(2006.01)*

(52) Classification Coopérative des Brevets (CPC):
**G01S 7/4021; G01S 7/34;** G01S 2013/0254

(54) **RADAR, ENGIN VOLANT COMPORTANT UN TEL RADAR, PROCÉDÉ DE TRAITEMENT DANS UN RADAR EMBARQUÉ DANS UN ENGIN VOLANT ET PROGRAMME D'ORDINATEUR ASSOCIÉ**

RADAR, FLUGGERÄT, DAS EINEN SOLCHEN RADAR UMFASST, VERARBEITUNGSVERFAHREN IN EINEM AN BORD EINES FLUGGERÄTS EINGEBAUTEN RADARS UND ENTSPRECHENDES COMPUTERPROGRAMM

RADAR, AIRCRAFT COMPRISING SUCH A RADAR, METHOD FOR PROCESSING IN A RADAR ON BOARD AN AIRCRAFT AND ASSOCIATED COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2019 FR 1913296**

(43) Date de publication de la demande:
**02.06.2021 Bulletin 2021/22**

(73) Titulaire: **THALES**
**92400 Courbevoie (FR)**

(72) Inventeurs:
• **MAZEAU, Thierry**
  **29238 BREST CEDEX 3 (FR)**
• **RENARD, Christian**
  **29238 BREST CEDEX 3 (FR)**
• **GAGNEPAIN, Eric**
  **29238 BREST CEDEX 3 (FR)**

(74) Mandataire: **Lavoix**
**2, place d'Estienne d'Orves**
**75441 Paris Cedex 09 (FR)**

(56) Documents cités:
**US-A1- 2012 081 247    US-A1- 2016 266 239**

EP 3 828 586 B1

**Description**

La présente invention concerne le domaine du radar, notamment les radars aéroportés, comprenant une antenne émettrice-réceptrice comportant une pluralité d'éléments radiatifs répartis sur une surface et adaptés pour l'émission et la réception d'une onde électromagnétique, ledit radar comprenant un bloc de contrôle de gain d'antenne.

Le document US 2012/081247 A1 décrit un radar comprenant des éléments radiatifs et un bloc de contrôle configuré pour contrôler les éléments radiatifs pour maximiser un gain du radar.

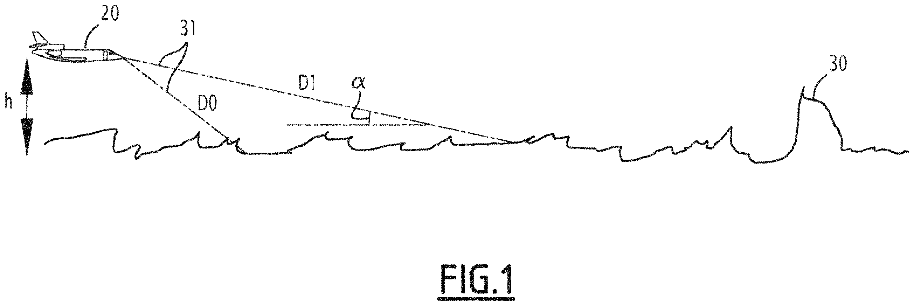

Il est connu, en référence à la figure 1 représentant un aéronef 20 embarquant un radar émettant des ondes électromagnétiques 31, que les échos en provenance de la surface 30 (sol, mer...) située sous l'aéronef 20 et réfléchissant les ondes électromagnétiques émises 31 saturent en réception le radar quand il est situé en basse altitude, que les échos issus de la partie de l'onde émise 31 ayant parcouru une distance D0 depuis le radar 20 jusqu'à la surface réfléchissante 30 seront de plus fortes amplitudes et retardés plus faiblement que les échos issus de la réflexion d'une partie de l'onde émise 31 ayant parcouru une distance plus longue D1 depuis le radar 20 jusqu'à la surface réfléchissante 30.

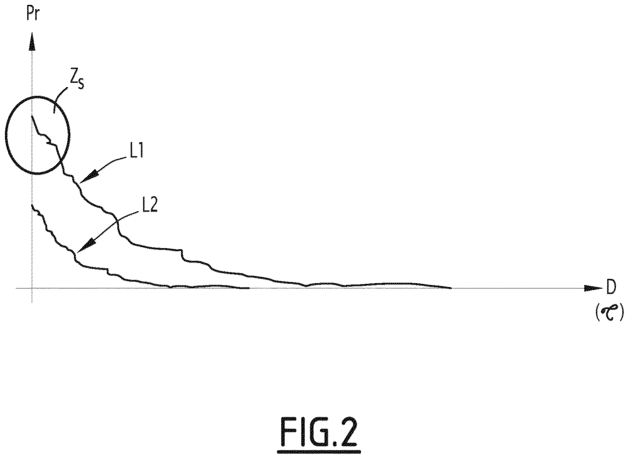

La courbe L1 en figure 2 représente un graphe donnant l'allure générale, en ordonnée, de la puissance des échos reçus par l'antenne du radar en fonction, en abscisse, de la distance D parcourue par l'onde émise 31 entre le radar et la surface réfléchissante (ou similairement du retard temporel $\tau$ entre l'émission d'une onde et la réception par le radar de l'écho de cette partie d'onde D = c/2. $\tau$, où c est la célérité) ; la zone de saturation est représentée schématiquement par la référence Zs.

Pour éviter la saturation en entrée du radar occasionnée par la forte puissance des échos reçus par le radar à distance D ou retard $\tau$ faibles et également pour compenser les variabilités correspondantes d'amplitude, il est connu de disposer un atténuateur à Gain Variable dans le Temps, dit atténuateur GVT, qui effectue deux fonctions :

- atténuer le gain de la chaîne de réception pour s'assurer que le niveau maximum des signaux reçus ne soit pas dans la zone de saturation du récepteur ;
- effectuer en outre un traitement de compensation de gain, appelé traitement de compensation GVT ci-après, permettant de compenser la variation de niveau des échos reçu en fonction du retard $\tau$, donc de la distance D, en ajustant le gain du récepteur avec une loi de gain inverse à la variation des niveaux en fonction de $\tau$ (qui est de la forme F($\tau$)= $1/\tau^{\alpha}$, avec $\alpha$ nombre réel).

Le document US 2016/266239 A1 décrit un radar comprenant un détecteur configuré pour réinitialiser un filtre de réception de signaux suite à une détection de saturation dans les signaux reçus.

Cet atténuateur GVT doit donc être placé, afin d'éviter la saturation, très en amont de la chaîne de réception du radar, sur le signal radiofréquence reçu au niveau de l'antenne, ce qui a pour effet d'augmenter le facteur de bruit de la réception du radar, effet qui doit alors également être compensé en temps réel en fonction de la distance D (du retard $\tau$). De plus, un tel atténuateur nécessite d'être calibré en fréquence et en température pour compenser les dispersions de gain. Une telle solution d'atténuateur GVT se révèle en outre particulièrement complexe à déployer dans les architectures modernes des radars qui présentent un nombre de voies en réception de plus en plus grand.

A cet effet, suivant un premier aspect, l'invention propose un radar du type précité selon la revendication 1.

L'invention permet ainsi de maintenir un niveau de réception en adéquation avec les performances du récepteur et en particulier d'éviter la saturation du radar en réception.

Elle exploite ainsi le fait que, en référence à la figure 2, plus la hauteur h de l'engin mobile 20 par rapport à la surface 30 est faible, plus la puissance des échos proches sera élevée et plus l'incidence $\alpha$ de l'onde émise 31 par rapport à la surface 30 est faible, plus l'étalement dans le temps des échos de sol (et donc le cas échéant des niveaux saturants) est important.

Dans des modes de réalisation, le radar est selon l'une quelconque des revendications 2 à 4.

Suivant un deuxième aspect, la présente invention propose un engin volant selon la revendication 5.

Suivant un troisième aspect, la présente invention propose un procédé de traitement selon la revendication 6.

Dans des modes de réalisation, le procédé est selon la revendication 7.

Suivant un quatrième aspect, la présente invention propose un processus de traitement qui peut être décliné en un programme d'ordinateur selon la revendication 8.

Ces caractéristiques et avantages de l'invention apparaîtront à la lecture de la description qui va suivre, donnée uniquement à titre d'exemple, et faite en référence aux dessins annexés, sur lesquels :

[Fig 1] la figure 1 représente une vue d'un aéronef embarquant un radar dans un mode de réalisation de l'invention ;

[Fig 2] la figure 2 est une vue d'un graphe représentant la puissance d'onde électromagnétique reçue par un radar en fonction de la distance parcourue par une onde reçue en écho ou du temps de propagation correspondant, notamment dans un mode de réalisation de l'invention ;

[Fig 3] la figure 3 est une vue schématique d'un radar dans un mode de réalisation de l'invention ;

[Fig 4] la figure 4 est une vue schématique d'une antenne dans un mode de réalisation de l'invention ;
[Fig 5] la figure 5 est un organigramme d'étapes mises en oeuvre dans un mode de réalisation de l'invention.

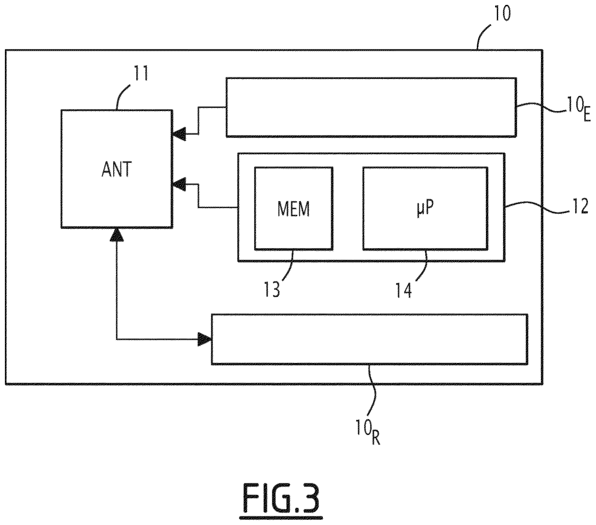

La figure 3 représente un radar 10 dans un mode de réalisation de l'invention.

Le radar 10 est adapté pour, lorsqu'il est embarqué dans un engin volant tel qu'un aéronef 20, détecter la présence d'objets cibles tels que les avions, les bateaux, ou la pluie, et/ou déterminer la position ainsi que la vitesse de tels objets cibles. En effet, les ondes envoyées par le radar 10 sont réfléchies notamment par l'objet cible, et les signaux de retour (appelés *écho radar* ou *écho-radar*) sont captés et analysés par le radar.

Le radar 10 comporte une antenne émettrice-réceptrice 11, un bloc de contrôle de gain d'antenne 12, un bloc d'émission radar $10_E$ et un bloc de réception radar $10_R$.

L'antenne émettrice-réceptrice 11 est adaptée pour l'émission d'une onde électromagnétique dans une direction de pointage et pour la réception d'une onde électromagnétique.

Dans des modes de réalisation, l'antenne 11 est une antenne à balayage électronique active : l'antenne est en réalité un ensemble de plusieurs (plusieurs centaines typiquement) éléments radiatifs, nommés sous-antennes ou antennes élémentaires ; ces antennes élémentaires sont indépendantes les unes des autres et disposant chacune de leur source propre. Dans des modes de réalisation, l'antenne 11 est AESA (« Active Electronically Scanned Array », MIMO (Multiple Input Multiple Output...

Dans un mode de réalisation considéré, l'antenne 11 est constituée par exemple par une antenne réseau à commande de phase.

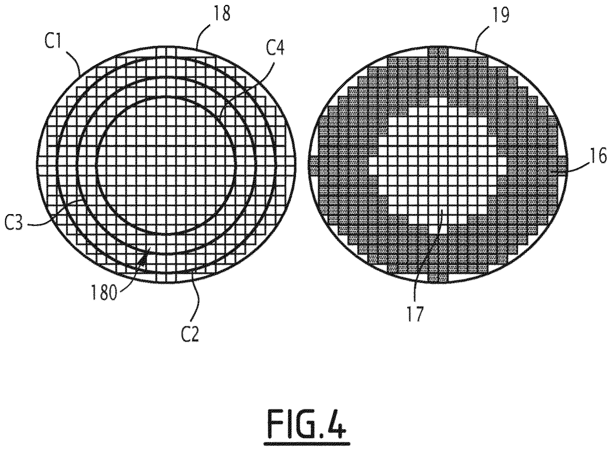

Dans le mode de réalisation considéré, l'antenne 11 comprend, en référence à la figure 4, une surface 18 et une pluralité d'antennes élémentaires 180 réparties sur ladite surface 18, disposées de façon matricielle et dessinant ici une forme sensiblement circulaire. Dans d'autres modes de réalisation, la forme de la surface d'émission est autre : carrée, rectangulaire, triangulaire ...

Chaque antenne élémentaire 180 constitue un élément radiatif adapté pour émettre à, une fréquence donnée et avec une phase donnée, une onde électromagnétique propre selon une direction normale à la surface 18.

Dans le mode de réalisation considéré, chaque élément radiatif émet à la même fréquence avec une amplitude et une phase propres à chaque élément radiatif.

Dans des modes de réalisation, le ou les faisceaux de l'antenne 11 est/sont commandé(s) en position angulaire etc.

Le radar 10 comporte un bloc d'émission $10_E$ adapté pour générer l'onde à émettre par l'antenne 11.

Le bloc d'émission $10_E$ comprend par exemple de façon connue un oscillateur permanent, un amplificateur et un modulateur (non représentés). Dans un mode de réalisation, il est en outre adapté pour commander le ou les faisceaux de l'antenne 11 en position, déplacement etc.

Le radar 10 comporte un bloc de réception $10_R$ adapté pour traiter une onde reçue par l'antenne 11 et issue de réflexion de l'onde émise, pour déterminer l'existence (et/ou la position/ et/ou la vitesse) d'une ou plusieurs cibles.

Dans un mode de réalisation, le bloc de réception $10_R$ comporte une chaîne de traitement auquel le signal en sortie d'antenne est fourni ; la chaîne comporte les modules successifs suivants : un module formateur de voies, un module d'amplification de chacune des voies en hyperfréquence, un module de transposition en fréquence intermédiaire, un module de codage et un module de traitement numérique.

Dans le mode de réalisation considéré, le radar 10 comporte en outre un bloc de contrôle 12 de gain d'antenne 11 en réception et/ou en émission, dans le cas particulier considéré, le bloc de contrôle 12 de gain d'antenne est un bloc de contrôle 12 de PIRE (Puissance Isotrope Rayonnée Equivalente).

Le bloc de contrôle de PIRE 12 comprend une boucle de régulation pour maintenir le niveau de réception de ladite onde électromagnétique au-dessous d'un seuil déterminé (choisi pour qu'il soit en dessous du niveau de saturation du récepteur) par une boucle d'ajustement de la PIRE de l'antenne émettrice-réceptrice ; il est adapté pour déclencher des modifications de la PIRE utilisée pour l'émission d'une onde électromagnétique par l'antenne 11.

La boucle de régulation peut être implémentée de différentes manières, éventuellement combinables, dont deux sont explicitées ci-après.

Dans un premier mode de réalisation, le bloc de contrôle de PIRE 12 est adapté pour, par exemple avant chaque émission d'une nouvelle impulsion radar, déterminer le niveau courant de signal reçu par l'antenne 11 du radar 10 correspondant aux échos de la précédente impulsion émise. Puis le bloc de contrôle de PIRE 12 est adapté pour comparer ce niveau avec un niveau de référence Pref (par exemple Pref = 0 dBm), l'écart déterminé suite à cette comparaison permettant d'en déduire l'atténuation Att souhaitée et de déclencher les modifications à apporter à la PIRE en fonction de l'atténuation à apporter. Par exemple le niveau courant déterminé est celui du signal maximum mesuré en fin de chaîne de réception, après le traitement numérique. Une telle boucle de régulation permet de maintenir la PIRE autour de la valeur fixée, ici 0 dBm et donc permet de maintenir le niveau du signal dans une zone en adéquation avec les performances du récepteur et en particulier d'éviter la saturation du récepteur.

Par exemple, si le niveau maximum reçu en fin de chaîne de réception présente un écart de 6 dB au-dessus du niveau de référence, le niveau est ramené à la valeur de référence, par exemple comme décrit plus loin (en éteignant par exemple ici la moitié des antennes élémentaires).

Dans un deuxième mode de réalisation, la PIRE est ajustée par la boucle de régulation en fonction d'un ou plusieurs paramètres parmi la hauteur d'émission de l'onde électromagnétique et l'angle d'incidence $\alpha$ de l'onde émise par rapport à la surface réfléchissante.

Dans un tel mode de réalisation, la valeur courante de la hauteur d'émission est fournie au bloc de contrôle de PIRE 12 par des instruments de navigation de l'aéronef ou bien déterminé par le RADAR dans un mode de réalisation (télémètre air/sol et/ou la valeur courante d'angle d'incidence $\alpha$ est fournie au bloc de contrôle de PIRE 12 ($\alpha$ est par exemple une consigne d'utilisation du RADAR déterminée par les modes d'utilisation du RADAR ou encore imposée par le pilote de l'aéronef.

On entend par angle d'incidence, dans un mode de réalisation, l'angle entre l'axe du faisceau RADAR et l'horizon.

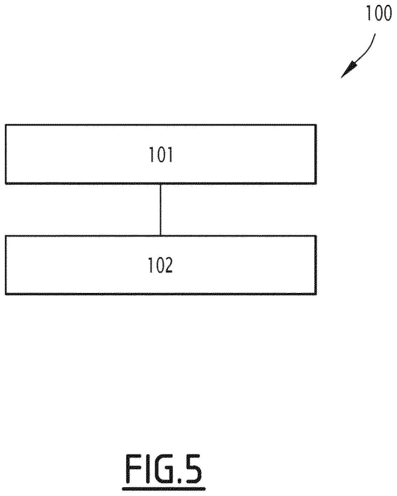

Dans un mode de réalisation, le bloc de contrôle 12 de PIRE comprend une mémoire 13 et un microprocesseur 14. La mémoire 13 comprend des instructions logicielles, qui, lorsqu'elles sont exécutées sur le microprocesseur 14, mettent en oeuvre les étapes incombant au bloc de contrôle de PIRE 12 décrites en référence à la figure 5 ci-après.

Dans un mode de réalisation, le bloc de contrôle de PIRE est intégré au sein de carte numérique de type COTS.

Dans un autre mode de réalisation, le bloc de contrôle 12 de PIRE est réalisé sous forme d'un composant logique programmable, tel qu'un FPGA (de l'anglais *Field Programmable Gate Array*), ou encore sous forme d'un circuit intégré dédié, tel qu'un ASIC (de l'anglais *Applications Spécifie Integrated Circuit*).

La figure 5 décrit un ensemble 100 d'étapes pour la mise en oeuvre de l'ajustement du gain d'antenne en émission et/ou en réception, dans le cas particulier considéré, ici d'ajustement de la PIRE, par une boucle de régulation dans un mode de réalisation, pendant une phase opérationnelle du radar 10 mise en oeuvre au cours du survol d'une zone d'analyse par l'aéronef 20 embarquant le radar 10 : le radar 10 émet une onde électromagnétique à l'aide de l'antenne 11 vers une surface 30 et reçoit via l'antenne 11 les échos radar correspondants, qu'il traite alors.

Dans une étape 101, le bloc de contrôle 12 de gain d'antenne détermine si des ajustements de gain d'antenne sont à mettre en oeuvre pour maintenir le niveau de réception de ladite onde électromagnétique au-dessous d'un seuil déterminé, et ainsi rester en-dehors de la plage de saturation du récepteur.

Dans une étape 102, le bloc de contrôle 12 de gain d'antenne déclenche auprès de l'antenne 11 la mise en oeuvre du changement ainsi déterminé de gain.

Dans le cas particulier de contrôle de PIRE, dans le premier mode de réalisation, avant l'émission d'une nouvelle impulsion radar, le bloc 12 de contrôle de PIRE détermine l'écart entre la puissance courante de signal reçu par le récepteur du radar correspondant aux échos de la précédente impulsion et la puissance de référence, puis il détermine le changement de PIRE à mettre en oeuvre en fonction de cet écart.

Dans le deuxième mode de réalisation, le bloc de contrôle 12 de PIRE reçoit la valeur actualisée de la hauteur h du radar 10 par rapport à la surface en cours de survol et/ou la valeur actualisée de l'angle d'incidence $\alpha$.

Le bloc de contrôle 12 de PIRE, suite à la réception de la ou des valeurs actualisées, détermine un changement de PIRE 11 en fonction de cette valeur actualisée (ou de ces valeurs actualisées).

Dans une étape 102, le bloc de contrôle 12 de PIRE déclenche auprès de l'antenne 11 la mise en oeuvre du changement ainsi déterminé de PIRE.

La présente invention permet ainsi de moduler la PIRE à l'émission en fonction du niveau des échos de sol (« clutter » en anglais).

Il existe par ailleurs différentes solutions pour ajuster la PIRE : par exemple, par ajustement de la puissance émise par chaque antenne élémentaire 180, en augmentant ou diminuant la puissance émise par chaque antenne élémentaire 180 émettant une puissance non nulle et/ en, comme considéré ci-après, en éteignant ou allumant un certain nombre de ces antennes élémentaires.

Dans un mode de réalisation, afin de diminuer la PIRE de l'antenne 11 telle que représentée à gauche de la figure 4 où chaque antenne élémentaire 180 est active, le bloc de contrôle 12 de PIRE commande la mise en état inactif (puissance émise nulle) des antennes élémentaires 180 situées en périphérie de la surface d'émission 18 : les antennes élémentaires alors désactivées en émission sont représentées en noir dans la partie droite de la figure 4. Ceci a pour effet d'élargir le faisceau d'onde et de diminuer la puissance totale rayonnée.

Dans un autre mode de réalisation, l'inverse est commandé : seules restent actives les antennes élémentaires 180 situées dans l'anneau périphérique, tandis que les antennes élémentaires centrales sont désactivées : la directivité et la largeur angulaire du faisceau sont alors similaires à celle de l'antenne 11 avec toutes ses antennes élémentaires actives, la réduction de PIRE étant alors dans le rapport Na/NT comme présenté ci-dessous.

Soit :

$a_0$ la surface effective d'une antenne élémentaire ;
$N_k$ le nombre d'antennes élémentaires 180 sur la surface 18 ;
$\lambda$ : la longueur d'onde ;
on sait que le gain (en linéaire) dans l'axe de pointage, perpendiculaire à la surface 18 est $G_k$ :

$$G_k = \frac{4.\pi.a_0}{\lambda^2}.N_k$$

(Nota : le gain dépointé de $\varphi$ est : $G_d = \frac{4.\pi.a_0}{\lambda^2}. N_k. \cos \varphi$ ).

Chaque antenne élémentaire 180 délivre une puissance *p*.

La puissance totale $P_k = p. N_k$

La PIRE de l'antenne 11 est égale à $P_k. G_k$.

La détermination du nombre $N_a$ d'antennes élémentaires actives à conserver (et donc du nombre d'antennes élémentaires à désactiver $N_d$ avec $N_d = N_T - N_a$ est par exemple effectuée par le bloc de contrôle 12 de PIRE à l'aide de la formule suivante :

$$N_a = \sqrt{\frac{N_T{}^2}{Att}}$$

Où :

$N_T$ est le nombre total d'antennes élémentaires 180 ;
$N_a$ est le nombre d'antennes élémentaires 180 actifs;
Att est le rapport d'atténuation de la puissance du signal de réception (en dB) désirée.

L'atténuation, dans le premier mode de réalisation, est déterminée en fonction de l'écart déterminé entre le niveau courant de réception et le niveau de référence.

Par exemple, dans un cas où h est de 1000 m, l'incidence et l'ouverture de 5°, la boucle de régulation permet ainsi, dans un cas particulier de réalisation, de faire varier le gain de chaîne de 135 dB à 143 dB selon D, pour contenir le niveau de clutter aux alentours de 0 dBm, soit une variation de 8 dB.

Pour savoir quel ajustement de PIRE est nécessaire, le maximum de puissance reçu est déterminé, correspondant au signal le moins retardé.

Par exemple un niveau de clutter à 0 dBm est souhaité, que l'on dispose d'un gain de chaîne dans le récepteur de 140 dB et que le niveau max du signal est à - 134 dB, la PIRE doit alors être baissée de 6 dB, soit une baisse de 4 en linéaire, soit Na = 500

L'atténuation est dans le deuxième mode de réalisation décrit, déterminée en fonction de tables de valeurs définissant la valeur d'atténuation en fonction de $\alpha$ et h (issues par exemple des tables GVT qui sont fonction elles aussi de h et de $\alpha$).

Exemple : si $N_T$ = 1000 et Att = 2, alors le nombre d'antennes élémentaires à garder actives est $N_a$, avec

$$N_a = \sqrt{\frac{1000^2}{2}} = 707$$

Cette formule donnant $N_a$ est facilement démontrable. Car comme vu plus haut, la PIRE est égale à $P_k. G_k = p. N_k{}^2. \frac{4.\pi.a_0}{\lambda^2} = p. N_k{}^2. Cte$ . Ce qui entraîne, qu'en appelant PIRE$_T$ la PIRE de l'antenne 11 quand toutes ($N_T$) ses antennes élémentaires 180 sont actives et PIRE$_a$ la PIRE de l'antenne 11 quand seules $N_a$ de ses antennes élémentaires 180 sont actives, il advient que :

$$PIRE_T = p. N_T{}^2. Cte$$

$$PIRE_a = p. N_a{}^2. Cte \; ;$$

et que donc

$$Att = \frac{PIRE_T}{PIRE_a} = \frac{N_T{}^2}{N_a{}^2}.$$

La surface de l'antenne est $S_k = N_k. a_0$ ; son diamètre est $D_k = 2. \sqrt{\frac{N_k.a_0}{4.\pi}}$ dans le cas d'une surface ronde ;

$$G_k = 6. \left(\frac{D_k}{\lambda}\right)^2$$

L'angle d'ouverture est $\theta_k = 70. \frac{\lambda}{D_k}$ .Pour $\alpha$ constant, quand h augmente, le niveau du signal reçu diminue, Att diminue, la PIRE adaptée selon l'invention augmente.

Pour h constant, quand $\alpha$ (considéré en valeur absolue) augmente (tend vers l'aplomb), le niveau du signal reçu augmente, donc, selon l'invention la valeur Att augmente, on diminue la PIRE.
La PIRE est donc une fonction décroissante de h et une fonction croissante de $|\alpha|$.

Dans un mode de réalisation, le bloc de réception $10_R$ comporte en outre dans le mode de réalisation un module de type GVT effectuant un traitement de compensation GVT, i.e. compensant la variabilité des amplitudes des échantillons numériques des signaux d'écho reçus en fonction de la distance D et du temps t. Ce traitement GVT est effectué par exemple après codage, dans le module de traitement numérique, donc bien en aval, ce qui réduit le bruit par rapport à l'art antérieur.

La courbe L2 en figure 2 représente un graphe donnant l'allure générale, en ordonnée, de la puissance des échos reçus par l'antenne du radar en fonction, en abscisse, de la distance D parcourue par l'onde émise 31 entre le radar et la surface réfléchissante (ou similairement du temps t) après mise en oeuvre de l'atténuation de PIRE en émission selon l'invention pour éviter la saturation en entrée du radar 10, pour une hauteur et une incidence identiques à celles de la courbe L1 correspondant à une PIRE maximum.

Dans un mode de réalisation, la configuration des antennes élémentaires en réception, elle, reste inchangée alors que la configuration des antennes élémentaires en émission est ajustée selon l'invention.

D'autres modes de réalisation de l'invention peuvent toutefois être mis en oeuvre, outre la limitation du niveau reçu maximum par contrôle de PIRE (à l'émission par conséquence) avec traitement de compensation GVT par traitement numérique du signal tel qu'exposé ci-dessus, par exemple, dans des modes de réalisation optionnellement combinables avec le précédent et/ou entre eux :

- limiter le niveau reçu maximum en limitant le gain d'antenne en réception par le bloc de contrôle de gain d'antenne 12 sous le seuil de saturation du radar 10 (par extinction/allumage d'antennes élémentaires) et faire la compensation GVT par traitement numérique du signal reçu ;
- limiter le niveau reçu maximum sous le seuil de saturation du radar 10 et faire le traitement de compensation GVT par le bloc de contrôle de gain d'antenne 12, tous deux par ajustement par ce dernier du gain d'antenne à la réception :

  soit en appliquant des lois de compensation GVT préétablies et fonction de l'altitude et de l'incidence,
  soit en régulant le niveau reçu autour d'une valeur de référence choisie pour être dans une zone de travail compatible avec les caractéristiques du récepteur en particulier hors de sa zone de saturation ;

- limiter le niveau reçu maximum sous le seuil de saturation du radar 10 en limitant la PIRE (à l'émission par conséquence) par le bloc de contrôle de gain d'antenne 12 comme décrit plus haut par exemple et faire la compensation GVT par le bloc de contrôle de gain d'antenne 12 en ajustant en outre le gain d'antenne à la réception.

Les deux derniers modes de réalisation listés nécessitent que les antennes élémentaires soient pilotables séparément en émission et réception.

Dans les modes de réalisation avec ajustement du gain d'antenne en réception pour empêcher la saturation du récepteur, l'ajustement de gain en réception est itéré par exemple à chaque nouveau train d'échos reçu, i.e. à nouvelle case distance d'une séquence de cases distances considérées correspondant aux échos successivement reçus d'une même impulsion émise.

Dans un mode de réalisation, en référence à la figure 4, le bloc de contrôle de gain 12 en émission et/ou en réception est adapté pour ajuster le gain d'antenne en émission et/ou en réception pas à pas en activant d'abord seulement les antennes élémentaires en émission et/ou en réception dans l'anneau entre les cercles C1 et C2, puis en activant ensuite en outre seulement les antennes élémentaires entre C2 et C3 si nécessaire, puis en activant seulement les antennes élémentaires entre C3 et C4, si nécessaire. Cette disposition, similaire au fonctionnement d'un diaphragme d'appareil photographique, permet de faire varier le gain sans changer l'ouverture de l'antenne. Alternativement, les anneaux peuvent être allumés successivement au contraire en partant du centre vers l'extérieur, ce qui change et le gain et l'ouverture (avec l'anneau central ou le disque central uniquement : la PIRE est minimale, l'ouverture est maximale, puis le gain augmente et l'ouverture diminue avec le nombre d'anneaux activés). Dans un mode de réalisation, pour effectuer un traitement de compensation GVT, l'anneau le plus extérieur, ie entre C1 et C2 est activé en réception, puis les autres anneaux sont activés tour à tour en partant de l'anneau extérieur jusqu'à l'anneau le plus intérieur.

La largeur de chaque anneau peut être définie de manière à ce que le pas de gain soit constant, pour ce faire, il faut que le nombre d'antennes élémentaires activées sur chaque anneau soit le même ; la largeur d'anneau est inversement proportionnelle au diamètre de l'anneau.

La largeur de l'anneau la plus fine est définie par la présence d'au moins un module pour une largeur d'anneau la plus réduite possible.

Ce nombre de modules détermine les largeurs des anneaux suivants et par conséquent, leur nombre.

En synthèse, le procédé se déroule de la manière suivante en fonction du temps :
Pour une phase d'émission :
les modules situés dans les anneaux concentriques de l'antenne en émission sont activés pour ajuster le gain de l'antenne par commutations des anneaux de manière contiguë (comme un diaphragme), afin d'éviter la saturation du récepteur. Le gain de l'antenne en émission est dont ajusté à chaque récurrence RADAR avec une valeur constante sur toute la durée de l'impulsion d'émission.

Pour une phase de réception :
les modules situés dans les anneaux concentriques de l'antenne en réception sont activés pour ajuster le gain de l'antenne par commutations des anneaux de manière contiguë (comme un diaphragme), afin de compenser la variation d'amplitude des échos de réception en fonction du temps (ou de la distance). Le gain sera donc ajusté de manière dynamique lors de la réception de manière à avoir un gain minimum en début de réception et maximum en fin, comme cela est le cas avec un atténuateur variable GVT.

Nota :

En phase d'émission, il est aussi possible d'ajuster le gain de l'antenne d'émission en activant d'abord les anneaux les plus petits (toujours de manière contiguë). Dans ce cas, l'ouverture de l'antenne ne sera pas constante.

L'invention permet de supprimer les atténuateurs GVT classiquement disposés en tête des récepteurs hyperfréquence pour empêcher la saturation par le signal en retour de sol proche, et par le fait améliore le facteur de bruit de la chaîne de réception.

Cette invention allège l'architecture physique des RADAR, ainsi que les réglages/étalonnages associés et diminue donc leurs coûts.

Elle allège aussi les traitements en supprimant les calibrations des atténuateurs GVT.

La furtivité du RADAR est en outre amélioré, du fait de la diminution de la PIRE plutôt qu'en baissant le gain en réception.

On notera que l'invention a été décrite ci-dessus en référence à un radar embarqué dans un aéronef. Dans d'autres modes de réalisation, le radar 10 lors de son utilisation à des fins de détection de cible se trouve embarqué dans d'autres engins volants, mobiles ou fixes, tels que des drones, des hélicoptères, des ballons...

**Revendications**

1. Radar (10) comprenant :

   a) une antenne émettrice-réceptrice (11) comportant une pluralité d'éléments radiatifs (180) répartis sur une surface (18) et adaptés pour l'émission depuis une hauteur donnée (h) par rapport à une surface donnée (30) et selon un angle d'incidence donné ($\alpha$) et la réception d'une onde électromagnétique,

   b) un bloc de contrôle de gain d'antenne (12) adapté pour rétro-contrôler, par une boucle d'ajustement, le gain d'antenne en émission et/ou en réception par extinction ou allumage d'éléments radiatifs de la pluralité d'éléments radiatifs, pour maintenir le niveau de réception des ondes électromagnétiques au-dessous d'un seuil déterminé inférieur à la zone de saturation du radar, bloc de contrôle de gain (12) étant aussi adapté pour, dans ladite boucle d'ajustement, effectuer au moins une des opérations suivantes parmi :

   - déterminer l'écart entre le niveau courant de l'onde électromagnétique reçue et un niveau de référence, pour déterminer l'ajustement de gain en fonction dudit écart et pour commander l'extinction ou l'allumage d'éléments radiatifs en émission et/ou en réception en fonction dudit ajustement de gain déterminé ;
   - déterminer au moins un ensemble de valeur(s) comprenant au moins une valeur parmi ladite hauteur donnée (h) et ledit angle d'incidence donné ($\alpha$), pour déterminer l'ajustement de gain en fonction de chaque valeur dudit ensemble de valeur(s) déterminé et pour commander l'extinction ou l'allumage d'éléments radiatifs en émission et/ou en réception en fonction dudit ajustement de gain déterminé.

2. Radar (10) selon la revendication 1, dans lequel le bloc de contrôle de gain (12) est adapté pour, dans ladite boucle d'ajustement, ajuster le gain conformément à une fonction calculant la valeur de gain en fonction d'au moins chaque valeur dudit ensemble de valeur(s), ladite fonction étant une fonction décroissante de ladite valeur lorsque la valeur est la hauteur et une fonction croissante de la valeur lorsque la valeur est l'angle d'incidence

3. Radar (10) selon la revendication 1 ou 2, dans lequel le bloc de contrôle de gain (12) est adapté pour modifier le gain selon au moins une opération parmi une commande de modification de puissance non nulle émise par chaque élément radiatif (180) et une commande d'allumage ou d'extinction de certains au moins desdits éléments radiatifs.

4. Radar (10) selon l'une quelconque des revendications précédentes, comprenant un module de compensation adapté pour atténuer l'amplitude d'une onde électromagnétique reçue en fonction de la distance parcourue jusqu'à ladite surface par ladite onde électromagnétique, ledit module de compensation étant adapté pour effectuer cette atténuation sur des échantillons numériques de l'onde électromagnétique reçue en fonction de la distance et/ou pour effectuer cette atténuation par une commande d'allumage ou d'extinction de certains au moins desdits éléments radiatifs déterminée en fonction de ladite distance.

5. Engin volant (20) comprenant un radar (10) embarqué selon l'une des revendications précédentes.

6. Procédé de traitement dans un radar (10) embarqué dans un engin volant (20), le radar (10) comprenant une antenne émettrice-réceptrice (11) comportant une pluralité d'éléments radiatifs (180) répartis sur une surface (18) et adaptés pour l'émission et la réception d'une onde électromagnétique, ledit procédé comprenant les étapes consistant à :

   i) émettre depuis l'antenne une onde électromagnétique et recevoir par l'antenne une onde électromagnétique ;

ii) rétro-contrôler, par une boucle d'ajustement du bloc électronique de contrôle de gain (12), le gain d'antenne en émission et/ou en réception par extinction ou allumage d'éléments radiatifs de la pluralité d'éléments radiatifs, pour maintenir le niveau de réception des ondes électromagnétiques au-dessous d'un seuil déterminé inférieur à la zone de saturation du radar ladite boucle d'ajustement comprenant au moins une des sous-étapes suivantes :

ii.1) déterminer l'écart entre le niveau courant de l'onde électromagnétique reçue et un niveau de référence, déterminer l'ajustement de gain en fonction dudit écart et commander l'extinction ou l'allumage d'éléments radiatifs en émission et/ou en réception en fonction dudit ajustement de gain déterminé ;

ii.2) l'émission ayant eu lieu depuis une hauteur donnée (h) par rapport à une surface donnée (30) et selon un angle d'incidence donné (α), déterminer au moins un ensemble de valeur(s) comprenant au moins une valeur parmi ladite hauteur donnée (h) et ledit angle d'incidence donné (α), déterminer l'ajustement de gain en fonction de chaque valeur dudit ensemble de valeur(s) déterminé et commander l'extinction ou l'allumage d'éléments radiatifs en émission et/ou en réception en fonction dudit ajustement de gain déterminé.

7. Procédé de traitement dans un radar (10) embarqué selon la revendication 6, selon lequel ladite boucle d'ajustement comprend l'ajustement du gain conformément à une fonction calculant la valeur de gain en fonction d'au moins chaque valeur dudit ensemble de valeur(s), ladite fonction étant une fonction décroissante de ladite valeur lorsque la valeur est la hauteur et une fonction croissante de la valeur lorsque la valeur est l'angle d'incidence.

8. Programme d'ordinateur comportant des instructions logicielles qui, lorsqu'elles sont exécutées par un ordinateur, mettent en oeuvre un procédé selon l'une quelconque des revendications 6 ou 7.

**Patentansprüche**

1. Vorrichtung (10) umfassend:

a) eine Sende-/Empfangsantenne (11) umfassend eine Vielzahl von Strahlungselementen (180), die auf einer Oberfläche (18) verteilt sind und zum Senden aus einer gegebenen Höhe (h) in Bezug auf eine gegebene Oberfläche (30) und unter einem gegebenen Einfallswinkel (α) und zum Empfangen einer elektromagnetischen Welle angepasst sind,

b) einen Antennenverstärkung-Steuerblock (12), der angepasst ist, um in einer Einstellschleife die Antennenverstärkung beim Senden und/oder Empfangen durch Abschalten oder Einschalten von Strahlungselementen der Vielzahl von Strahlungselementen zu hintersteuern, um den Empfangspegel der elektromagnetischen Wellen unter einem bestimmten Schwellenwert zu halten, der niedriger ist als die Sättigungszone des Radars ist, wobei der Verstärkungsblock (12) auch angepasst ist, um in der Einstellschleife mindestens einen der folgenden Vorgänge durchzuführen:

- Bestimmen der Abweichung zwischen dem aktuellen Pegel der empfangenen elektromagnetischen Welle und einem Referenzpegel, um die Verstärkungseinstellung abhängig von der Abweichung zu bestimmen und um das Aus- oder Einschalten von Sende- und/oder Empfangsstrahlelementen abhängig von der bestimmten Verstärkungseinstellung zu steuern;

- Bestimmen mindestens eines Satzes von Wert(en), umfassend mindestens einen Wert aus der gegebenen Höhe (h) und dem gegebenen Einfallswinkel (α), zum Bestimmen der Verstärkungseinstellung abhängig von jedem Wert des bestimmten Satzes von Wert(en) und um das Aus- oder Einschalten von sendenden und/oder empfangenden Strahlungselementen abhängig von der bestimmten Verstärkungseinstellung zu steuern.

2. Radar (10) nach Anspruch 1, wobei der Verstärkungssteuerblock (12) angepasst ist, um in der Einstellschleife die Verstärkung gemäß einer Funktion einzustellen, die den Verstärkungswert abhängig von mindestens jedem Wert des Satzes von Wert(en) berechnet, wobei die Funktion eine abnehmende Funktion des Werts ist, wenn der Wert die Höhe ist, und eine zunehmende Funktion des Werts ist, wenn der Wert der Einfallswinkel ist

3. Radar (10) nach Anspruch 1 oder 2, wobei der Verstärkungssteuerblock (12) angepasst ist, um die Verstärkung gemäß mindestens einem Vorgang aus einem Befehl zur Änderung der von jedem Strahlungselement (180) ausgesendeten Leistung ungleich null und einem Befehl zum Einschalten oder Ausschalten von mindestens gewissen der Strahlungselemente zu ändern.

**4.** Radar (10) nach einem der vorherigen Ansprüche, umfassend ein Kompensationsmodul, das angepasst ist, um die Amplitude einer empfangenen elektromagnetischen Welle abhängig von der Entfernung, die die elektromagnetische Welle bis zur Oberfläche zurückgelegt hat, zu dämpfen, wobei das Kompensationsmodul angepasst ist, um diese Dämpfung an digitalen Abtastwerten der empfangenen elektromagnetischen Welle abhängig von der Entfernung durchzuführen und/oder um diese Dämpfung durch eine Steuerung des Ein- oder Ausschaltens von mindestens gewissen der Strahlungselemente durchzuführen, die abhängig von der Entfernung bestimmt wird.

**5.** Fluggerät (20), umfassend ein Radar (10) an Bord nach einem der vorherigen Ansprüche.

**6.** Verfahren zur Verarbeitung in einem Radar (10) an Bord eines Fluggeräts (20), das Radar (10) umfassend eine Sende-/Empfangsantenne (11), umfassend eine Vielzahl von Strahlungselementen (180), die auf einer Oberfläche (18) verteilt sind und zum Senden und Empfangen einer elektromagnetischen Welle angepasst sind, das Verfahren umfassend die folgenden Schritte, bestehend aus:

i) Senden einer elektromagnetischen Welle von der Antenne und Empfangen einer elektromagnetischen Welle durch die Antenne;
ii) Hintersteuern, durch eine Einstellschleife des elektronischen Verstärkungssteuerblocks (12), der Antennenverstärkung beim Senden und/oder Empfang durch Ausschalten oder Einschalten von Strahlungselementen der Vielzahl von Strahlungselementen, um den Empfangspegel der elektromagnetischen Wellen unter einem bestimmten Schwellenwert zu halten, der niedriger ist als die Sättigungszone des Radars, wobei die Einstellschleife mindestens einen der folgenden Unterschritte umfasst:

ii.1) Bestimmen der Abweichung zwischen dem aktuellen Pegel der empfangenen elektromagnetischen Welle und einem Referenzpegel, um die Verstärkungseinstellung abhängig von der Abweichung zu bestimmen und um das Aus- oder Einschalten von Sende- und/oder Empfangsstrahlelementen abhängig von der bestimmten Verstärkungseinstellung zu steuern;
ii.2) wobei die Emission aus einer gegebenen Höhe (h) in Bezug auf eine gegebene Oberfläche (30) und unter einem gegebenen Einfallswinkel ($\alpha$) erfolgt ist, Bestimmen mindestens eines Satzes von Wert(en), umfassend mindestens einen Wert aus der gegebenen Höhe (h) und dem gegebenen Einfallswinkel ($\alpha$), Bestimmen der Verstärkungseinstellung abhängig von jedem Wert des bestimmten Satzes von Wert(en) und Steuern des Aus- oder Einschaltens von sendenden und/oder empfangenden Strahlungselementen abhängig von der bestimmten Verstärkungseinstellung.

**7.** Verarbeitungsverfahren in einem Radar (10) an Bord nach Anspruch 6, wobei die Einstellschleife die Einstellung der Verstärkung gemäß einer Funktion umfasst, die den Verstärkungswert abhängig von mindestens jedem Wert des Satzes von Wert(en) berechnet, wobei die Funktion eine abnehmende Funktion des Werts ist, wenn der Wert die Höhe ist, und eine zunehmende Funktion des Werts ist, wenn der Wert der Einfallswinkel ist.

**8.** Computerprogramm, umfassend Softwareanweisungen, die, wenn sie von einem Computer ausgeführt werden, ein Verfahren nach einem der Ansprüche 6 oder 7 implementieren.

**Claims**

**1.** A radar (10) comprising :

a) a transceiver antenna (11) including a plurality of radiating elements (180) distributed over a surface (18) and configured for emission from a given height (h) relative to a given surface (30) and at a given incidence angle ($\alpha$) and receiving an electromagnetic wave,
b) an antenna gain control unit (12) configured for feedback controlling, through an adjustment loop, the antenna gain in transmission and/or reception by turning on or off radiating elements of the plurality of radiating elements, in order to keep the reception level of the electromagnetic waves below a determined threshold below the saturation zone of the radar,

the gain control unit in addition being configured, in said adjustment loop, for performing at least one of the following operations:

- determining the deviation between the current level of the received electromagnetic wave and a reference level, in order to determine the gain adjustment as a function of said deviation and to command the turning off or on of radiating elements in transmission and/or reception based on said determined gain adjustment;
- determining at least one set of value(s) comprising at least one value among said given height (h) and said given incidence angle ($\alpha$), in order to determine the gain adjustment based on each value of said determined set of value(s) and to command the turning off or on of radiating elements in transmission and/or reception based on said determined gain adjustment..

**2.** The radar (10) according to claim 1, wherein the gain control unit (12) is configured, in said adjustment loop, for adjusting the gain according to a function calculating the gain value based on at least each value of said set of value(s), said function being a decreasing function of said value when the value is the height and an increasing function of the value when the value is the incidence angle.

**3.** The radar (10) according to claim 1 or 2, wherein the gain control unit (12) is configured for modifying the gain according to at least one operation among a nonzero power modification command emitted by each radiating element (180) and a command to turn on or off at least some of said radiating elements.

**4.** The radar (10) according to any one of the preceding claims, comprising a compensating module configured for attenuating the amplitude of a received electromagnetic wave based on the distance traveled to said surface by said electromagnetic wave, said compensating module being configured for performing this attenuation on digital samples of the received electromagnetic waves based on the distance and/or for performing this attenuation by a command to turn on or off at least some of said radiating elements determined based on said distance.

**5.** A flying device (20) comprising an embedded radar (10) according to one of the preceding claims.

**6.** A processing method in a radar (10) embedded in a flying device (20), the radar (10) comprising a transceiver antenna (11) including a plurality of radiating elements (180) distributed over a surface (18) and configured for the transmission and reception of an electromagnetic wave, said method comprising the following steps:

i) transmitting an electromagnetic wave from the antenna and receiving an electromagnetic wave by the antenna;
ii) feedback controlling, through an adjustment loop of the electronic gain control unit (12), the antenna gain in transmission and/or reception by turning on or off radiating elements of the plurality of radiating elements, in order to keep the reception level of the electromagnetic waves below a determined threshold below the saturation zone of the radar,

said adjustment loop comprising at least one of the following sub-steps among:

ii.1) determining the deviation between the current level of the received electromagnetic wave and a reference level, determining the gain adjustment as a function of said deviation and commanding the turning off or on of radiating elements in transmission and/or reception based on said determined gain adjustment;
ii.2) the transmission having taken place from a given height (h) relative to a given surface (30) and at a given incidence angle (α), determining at least one set of value(s) comprising at least one value among said given height (h) and said given incidence angle (α), determining the gain adjustment based on each value of said determined set of value(s) and commanding the turning off or on of radiating elements in transmission and/or reception based on said determined gain adjustment.

**7.** The processing method in an embedded radar (10) according to claim 6, wherein said adjustment loop comprises adjusting the gain according to a function calculating the gain value based on at least each value of said set of value(s), said function being a decreasing function of said value when the value is the height and an increasing function of the value when the value is the incidence angle.

**8.** A computer program comprising software instructions which, when executed by a computer, carry out a method according to claim 6 or 7.

FIG.1

**FIG.2**

**FIG.3**

## FIG.4

**FIG.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012081247 A1

- US 2016266239 A1